# EUROPÄISCHE PATENTANMELDUNG

(11) **EP 2 665 159 A2**
(43) Veröffentlichungstag der Anmeldung: **20.11.2013**
(21) Anmeldenummer: 13168146.2
(22) Anmeldetag: 16.05.2013
(51) Int. Cl.: H02K 3/20, H02K 3/52

(54) **Schenkelpolmaschine**

(30) Priorität: 16.05.2012 AT 501882012
(71) Anmelder: Hitzinger GmbH, 4020 Linz (AT)
(72) Erfinder: Roland, Helmut, 4030 Linz (AT)
(74) Vertreter: Jell, Friedrich

(57) **Zusammenfassung**

Es wird eine Schenkelpolmaschine mit einem Läufer (2) gezeigt, der ausgeprägte Pole (3, 4, 5, 6), mindestens eine Erregerwicklung (11) und mindestens eine Dämpferwicklung (12) aufweist, deren Dämpferstäbe (13, 19) wenigstens bereichsweise sowohl an mindestens einem Pol (3, 4, 5, 6) als auch zwischen zwei benachbarten Polen (3, 4 bzw. 4, 5 bzw. 5, 6 bzw. 6, 3) vorgesehen sind. Um eine besonders gegenüber Schieflast standfeste Schenkelpolmaschine (1) zu schaffen, wird vorgeschlagen, dass der Läufer (2) wenigstens eine die Erregerwicklungsteile (7, 8, 9, 10) benachbarter Pole (3, 4 bzw. 4, 5 bzw. 5, 6 bzw. 6, 3) abstützende Wicklungsabstützung (14) aufweist, die mindestens einen zwischen zwei Polen (3, 4 bzw. 4, 5 bzw. 5, 6 bzw. 6, 3) vorgesehenen Dämpferstab (19) der Dämpferwicklung (12) ausbildet, welcher Dämpferstab (19) mit den anderen Teilen der Dämpferwicklung (12) elektrisch verbunden, insbesondere kurzgeschlossen, ist.

## Beschreibung

Die Erfindung betrifft eine Schenkelpolmaschine mit einem Läufer, der ausgeprägte Pole, mindestens eine Erregerwicklung und mindestens eine Dämpferwicklung aufweist, deren Dämpferstäbe wenigstens bereichsweise sowohl an mindestens einem Pol, als auch zwischen zwei benachbarten Polen vorgesehen sind.

Bei Schenkelpolmaschinen ist es bekannt (DE1137126B), in der Pollücke zwischen den Polen des Läufers bzw. des Polrads Dämpferstäbe vorzusehen, um damit die äußeren Dämpferstäbe der Pole des Läufers vor Überlastung zu schützen, die bei einer unsymmetrischen Belastung der Schenkelpolmaschinen auftreten können. Die Dämpferstäbe in der Pollücke, die mit den Dämpferstäben der Pole des Läufers zu einer Dämpferwicklung elektrisch verbunden sind, werden in, auf den Polen aufgesetzten, zwischengeschichteten starken Polblechen gelagert. Nachteilig erfordert eine derartige Konstruktion einen erheblichen Aufwand und kann durch erhöhte Schwingungsneigung zu Instabilitäten und damit zu einer reduzierten Standfestigkeit der Schenkelpolmaschine führen.

Außerdem ist es aus dem Stand der Technik bekannt (DE4021913C2), bei einer Schenkelpolmaschine mit einem Läufer, der ausgeprägte Pole mit Erregerspulen aufweist, eine Wicklungsabstützung in die Pollücke zwischen den benachbarten Polen einzusetzen, um die Erregerwicklung gegenüber mechanischen Beschädigungen aufgrund einwirkender Fliehkräfte zu schützen.

Zudem ist aus der JP363153749U bekannt, Dämpferbleche zweier benachbarter Pole mit Hilfe einer Wicklungsabstützung am Rotor zu befestigen. Zu diesem Zweck bilden die Dämpferbleche Laschen aus, die von der keilförmigen Wicklungsabstützung an die Erregerspulen der Pole angedrückt werden.

Die Erfindung hat sich nun ausgehend vom eingangs geschilderten Stand der Technik die Aufgabe gestellt, eine Schenkelpolmaschine mit einem ausgeprägte Pole aufweisenden Läufer konstruktiv zu vereinfachen, wobei dennoch eine hohe Standfestigkeit gegenüber unsymmetrischen elektrischen Belastungen gewährleistet wird.

Die Erfindung löst die gestellte Aufgabe dadurch, dass der Läufer wenigstens eine die Erregerwicklungsteile benachbarter Pole abstützende Wicklungsabstützung aufweist, die mindestens einen zwischen zwei Polen vorgesehenen Dämpferstab der Dämpferwicklung ausbildet, welcher Dämpferstab mit den anderen Teilen der Dämpferwicklung elektrisch verbunden, insbesondere kurzgeschlossen, ist.

Weist der Läufer wenigstens eine die Erregerwicklungsteile, beispielsweise die Erregerspulen, benachbarter Pole abstützende Wicklungsabstützung auf, kann damit nicht nur eine besonders hohe Standfestigkeit der Schenkelpolmaschine gegenüber mechanischen Belastungen ermöglicht werden, zudem eröffnet sich dadurch die konstruktiv einfache Möglichkeit, die Dämpferwicklung auch in Richtung der Pollücke zu erweitern. Diese Wicklungsabstützung kann nämlich mindestens einen zwischen zwei Polen vorgesehenen Dämpferstab der Dämpferwicklung ausbilden, welcher Dämpferstab mit den anderen Teilen der Dämpferwicklung elektrisch verbunden ist. Erfindungsgemäß trägt nun auch die Wicklungsabstützung zur Dämpfung von inversen Feldern bei, so dass eine erheblich höhere Schieflast im Generatorbetrieb aufgenommen werden kann, als dies aus dem Stand der Technik von anderen Schenkelpolmaschinen bekannt ist. Dazu kann insbesondere auch die erhöhte konstruktive Freiheit der Dämpferanordnung im Bereich der Pollücke beitragen, was so für einen niedrigen ohmschen Widerstand der Wicklungsabstützung und damit der Dämpferwicklung genützt werden kann, um die Erwärmung des Läufers durch Stromwärmeverluste klein zu halten. Eine besonders robuste und verlustarme Schenkelpolmaschine kann somit geschaffen werden, die selbst für einen Einphasenbetrieb geeignet sein kann. Hinzu kommt, dass damit auch jene Teile der Dämpferwicklung in den Polschuhen der Pole vor Überlastung besonders gut geschützt werden können, wodurch die Standfestigkeit des Läufers und in weiterer Folge der Schenkelpolmaschine erhöht werden können. Im Gegensatz zum Stand der Technik kann daher durch die sich in Längserstreckung des Läufers verlaufenden Dämpferstäbe der Pole und der Wicklungsabstützung ein äußerst wirksame Dämpferwicklung bzw. Dämpferkäfig am Läufer ausgebildet werden. Konstruktive Einfachheit kann sich ergeben, wenn Dämpferstab mit den anderen Teilen der Dämpferwicklung kurzgeschlossen ist. Gegenüber dem Stand der Technik kann sich die erfindungsgemäße Lösung also durch konstruktive Einfachheit, sowie hohe Standfestigkeit und Robustheit gegenüber Schieflasten auszeichnen.

Erheblich höhere Schieflasten können von der Schenkelpolmaschine aufgenommen werden, wenn sich die Wicklungsabstützung mit Dämpferstäben über die Länge der Pollücke zwischen den benachbarten Polen erstreckt. Über die gesamte Länge der Pole kann so für eine gleichmäßige Dämpfung der inversen Felder gesorgt werden.

Jener in den Polen vorgesehene randseitige Teil der Dämpferwicklung kann vor Überlastung besonders gut geschützt werden, wenn die Wicklungsabstützung je einen an den jeweiligen Pol anschließenden Dämpferstab aufweist. So kann erfindungsgemäß der Konstruktionsaufwand der Schenkelpolmaschine mithilfe der Dämpferstäbe reduziert und in weiterer Folge bei verminderten Herstellungskosten auch die Robustheit der Schenkelpolmaschine erhöht werden.

Zur sicheren Abtragung erhöhter Schieflasten bzw. für einen sicheren einphasigen Generatorbetrieb der Schenkelpolmaschine können die Dämpferstäbe der Wicklungsabstützung gegenüber den Dämpferstäben der Pole elektrisch höher leitfähig ausgeführt sein. Dadurch können die Dämpferstäbe der Wicklungsabstützung die randseitigen Dämpferstäbe der Pole verbessert entlasten.

Erhöhte konstruktive Einfachheit am Läufers kann erreicht werden, wenn die Wicklungsabstützung keilförmige Abstützelemente aufweist, die voneinander beabstandet über die Länge der Pollücke verteilt die Erregerwicklungsteile der benachbarten Pole abstützen und über die Dämpferstäbe miteinander verbunden sind. Außerdem kann durch diese gewichtsreduzierte offene Profilform der Wicklungsabstützung der Gewichtseintrag des Läufers gering bleiben, wodurch kein nachteiliger Einfluss auf dessen mechanische Aufhängung befürchtet werden muss. Des Weiteren kann diese offene Käfigausführung der Wicklungsabstützung dazu genutzt werden, für eine verbesserte Kühlung der abgestützten Wicklungsteile zu sorgen.

Eine hohe mechanische Robustheit kann erreicht werden, wenn Abstützelemente und Dämpferstäbe stoffschlüssig miteinander verbunden, insbesondere verschweißt, sind.

Besteht die Wicklungsabstützung aus einem nicht oder schlecht magnetisch leitenden Werkstoff, können magnetische Kurzschlüsse über die Wicklungsabstützung vermieden werden. Insbesondere hat sich für die Wicklungsabstützung - nicht nur aus gewichtstechnischen Gründen - ein Aluminiumwerkstoff ausgezeichnet.

Eine verbesserte Kühlung der Wicklung kann ermöglicht werden, wenn die Wicklungsabstützung Leitflächen für eine Luftführung zu seinen abgestützten Erregerwicklungsteilen ausbilden. Vorzugsweise dienen diesem Zweck die Dämpferstäbe, die in der Art eines Schaufelrads eine Luftströmung in der Pollücke erzwingen.

Konstruktiv einfach ist die Wicklungsabstützung in die Pollücke zwischen den benachbarten Polen eingesetzt. Die konstruktive Einfachheit kann weiter verbessert werden, wenn die Wicklungsabstützung über mittige Befestigungsschrauben mit dem Läuferkern verbunden ist. So kann auch der symmetrische Aufbau des Läufers erleichtert werden - womit wiederum eine verringerte Läuferunwucht erreicht werden kann.

Ist zwischen der Wicklungsabstützung und den Erregerwicklung eine elektrische Isolierung vorgesehen, muss selbst im Falle einer Beschädigung der Isolierung der Erregerwicklung nicht mit einem Kurzschluss gerechnet werden. Die Standfestigkeit der Schenkelpolmaschine kann erfindungsgemäß also weiter erhöht werden.

Konstruktiv einfach ist die Wicklungsabstützung endseitig mit den anderen Teilen der Dämpferwicklung elektrisch verbunden, insbesondere kurzgeschlossen. Somit kann auch ermöglicht werden, die Kurzschlussleitung zur Wicklungsabstützung wartungstechnisch einfach und schnell zu überprüfen.

Die Dämpferwicklung kann je eine an den Läuferenden befestigte, elektrisch leitfähige Platte aufweisen, die mit der Wicklungsabstützung und den anderen Teilen der Dämpferwicklung elektrisch kurzgeschlossen ist, um die Robustheit hoch und den Widerstand der Dämpferwicklung niedrig zu halten. Auf bekannte Dämpferringe zum Kurzschließen aller Dämpferstäbe kann so verzichtet werden.

In den Figuren ist beispielsweise der Erfindungsgegenstand anhand eines Ausführungsbeispiels dargestellt. Es zeigen
Fig. 1 eine Stirnansicht auf einen teilweise aufgerissenen Läufer einer nicht näher dargestellten Schenkelpolmaschine,
Fig. 2 eine vergrößerte Teilansicht der Fig. 1 und
Fig. 3 eine Draufsicht auf den nach Fig. 1 dargestellten Läufer.

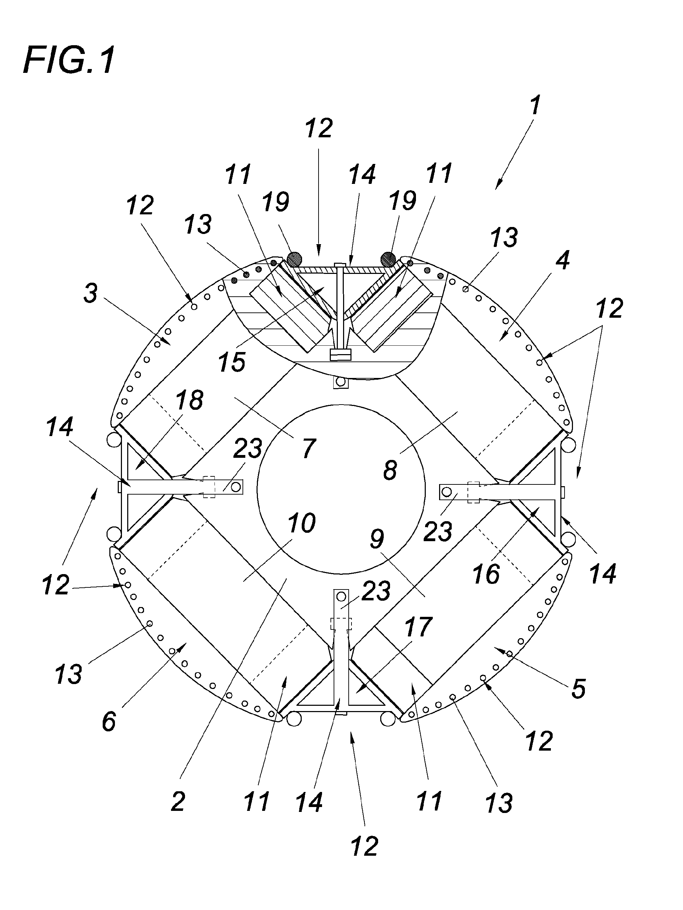

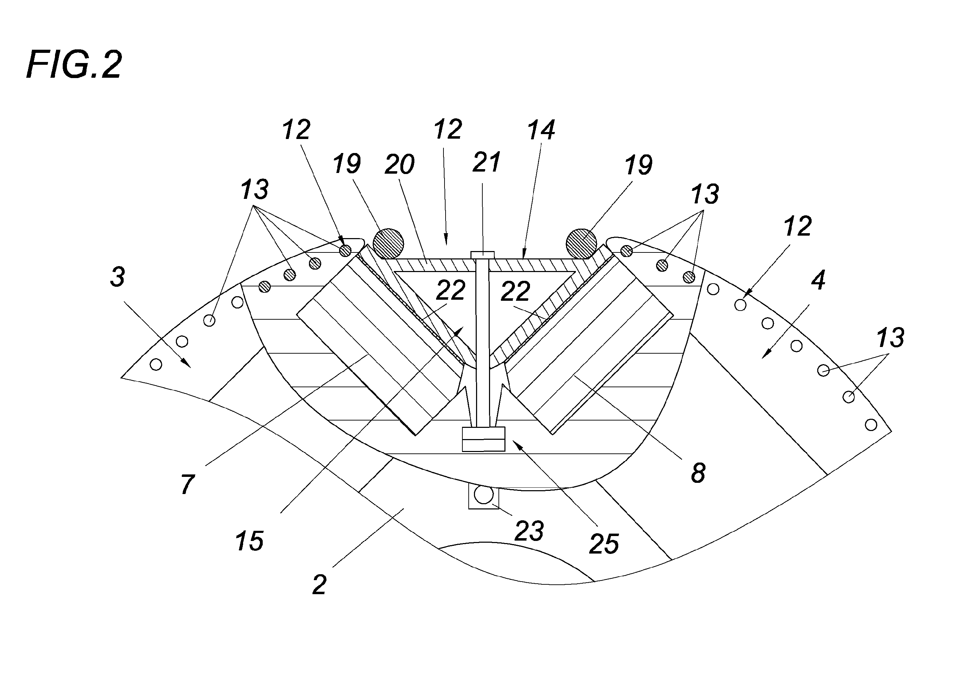

Nach Fig. 1 werden von einer vierpoligen Schenkelpolmaschine 1 ihr Läufer 2 bzw. ihr Polrad näher dargestellt. Der Läufer 2 bildet vier ausgeprägte Pole 3, 4, 5 und 6 aus, denen je eine Erregerspule 7, 8, 9 und 10 als Erregerwicklungsteile der Erregerwicklung 11 zugeordnet ist. Außerdem ist eine Dämpferwicklung 12 als Kurzschlusswicklung vorgesehen, um das stationäre und nichtstationäre Betriebsverhalten zu verbessern. Ferner hat diese Dämpferwicklung 12 auch die Aufgabe, ein im unsymmetrischen Betrieb (bzw. bei Schieflast) und im Extremfall des Einphasenbetriebs auftretendes inverses Drehfeld abzudämpfen, was nicht näher dargestellt worden ist. Hierfür weist die Dämpferwicklung 12 einerseits Dämpferstäbe 13 in den Polen 3, 4, 5 und 6 und andererseits auch zwischen zwei benachbarten Polen 3 und 4 bzw. 4 und 5 bzw. 5 und 6 bzw. 6 und 3 auf. Letzterer Teil der Dämpferwicklung 12 sorgt zusätzlich für einen Schutz der äußeren Dämpferstäbe 13 der Pole 3, 4, 5 und 6 vor Überlastung. Bekanntermaßen verlaufen die Dämpferstäbe 13, 19 verlaufen parallel in Längserstreckung des Läufers 2. Ein konstruktiv besonders einfacher Überlastungsschutz kann dadurch erreicht werden, dass Wicklungsabstützungen 14 als Teil der Dämpferwicklung 12 verwendet werden. Jede Wicklungsabstützung 14, die Erregerwicklungsteile benachbarter Pole 3 und 4 bzw. 4 und 5 bzw. 5 und 6 bzw. 6 und 3 abstützt, ist zu diesem Zweck elektrisch leitend ausgeführt und mit den anderen Teilen 13 der Dämpferwicklung 12 elektrisch zu einer Kurzschlusswicklung verbunden. So bildet die Wicklungsabstützung 14, wie für die Pollücke 15 der Pollücken 15, 16, 17 und 18 nach Fig. 2 gezeigt wird, Dämpferstäbe 19 aus, die mit den anderen Dämpferstäbe 13 der Dämpferwicklung 12 elektrisch verbunden ist. Zudem nützen die Wicklungsabstützungen 14 die Pollücken 15, 16, 17 und 18, um damit besonders widerstandsarm in paralleler Schaltung mit den Dämpferstäben 13 die Verluste, insbesondere Wärmeverluste, der Schenkelpolmaschine 1 gering zu halten.

Eine besonders widerstandsarme Kurzschlussstrecke wird ermöglicht, indem die Wicklungsabstützungen 14 Dämpferstäbe 19 ausbilden, die sich über die Länge der jeweiligen Pollücke 15, 16, 17 und 18 zwischen den benachbarten Polen 3 und 4 bzw. 4 und 5 bzw. 5 und 6 bzw. 6 und 3 erstrecken. Die Dämpferstäbe 19 schließen an den jeweiligen Pol 3, 4, 5 bzw. 6 an. Durch den dadurch gewährleisteten Nahbereich der Dämpferstäbe 19 zu den randseitigen Dämpferstäben 13 der Pole 3, 4, 5 bzw. 6 ist ein besonders hoher Überlastungsschutz geschaffen. Dieser Überlastungsschutz ist zusätzlich erhöht, indem die Dämpferstäbe 19 der Wicklungsabstützungen 14 im Vergleich zu den Dämpferstäben 13 der Pole 3, 4, 5 und 6 elektrisch höher leitfähig ausgeführt sind, beispielsweise durch eine erhöhte Drahtstärke, wie in Fig. 2 zu erkennen. Vorstellbar ist jedoch ebenso, diesen technischen Effekt zusätzlich oder alternativ durch eine besondere Materialauswahl der Dämpferstäbe 13 und 19 zu erreichen.

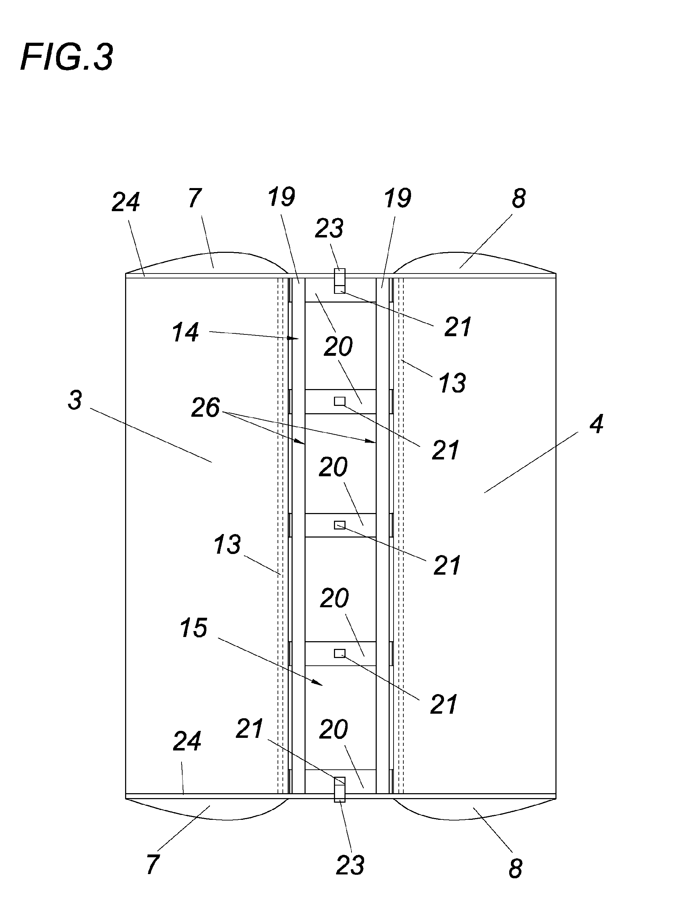

Nach den Figuren 2 und 3 ist zu erkennen, dass die Wicklungsabstützung 14 aus mehreren keilförmigen Abstützelementen 20 und zwei Dämpferstäben 19 ausgebildet ist, welche Teile stoffschlüssig miteinander verbunden sind. Die Abstützelemente 20 sind voneinander beabstandet über die Länge der Pollücke 15, 16, 17 und 18 verteilt angeordnet. Dadurch stellt sich eine besonders standfeste Abstützung der Erregerwicklungsteile 7, 8, 9 und 10 der benachbarten Pole 3 und 4 bzw. 4 und 5 bzw. 5 und 6 bzw. 6 und 3 ein. Mittige Befestigungsschrauben 21 verbinden die Wicklungsabstützung 14 mit dem Läuferkern 25 und sorgen so für einen festen Halt der in der jeweiligen Pollücke 15, 16, 17 bzw. 18 eingesetzten Wicklungsabstützung 14.

Eine Wicklungsabstützung 14 aus Aluminium hat sich hinsichtlich ihrer thermischen Leitfähigkeit zur Kühlung der Erregerwicklung 12 ausgezeichnet. Ferner beeinträchtigt ihre schlecht magnetisch leitende Eigenschaft das Erregerfeld des Läufers 2 nur gering. Außerdem kann damit eine vergleichsweise leichte Wicklungsabstützung 14 geschaffen werden.

Elektrische Kurzschlüsse werden durch eine zwischen der Wicklungsabstützung 14 und der Erregerwicklung 12 vorgesehene elektrische Isolierung 22 vermieden, was der Fig. 2 besser entnommen werden kann.

Der Fig. 3 kann weiter entnommen werden, dass die Wicklungsabstützung 14 endseitig über eine Kurzschlussleitung 23 mit den anderen Teilen der Dämpferwicklung 12 elektrisch verbunden ist. Hierzu weist die Dämpferwicklung 12 je eine an den Läuferenden befestigte, elektrisch leitfähige Platte 24 auf, die mit der Wicklungsabstützung 14 und den anderen Teilen der Dämpferwicklung 12, insbesondere den Dämpferstäben 13 der Pole 3, 4, 5 und 6 kurzgeschlossen sind.

Die Wicklungsabstützungen 14, insbesondere deren Dämpferstäbe 19, weisen Leitflächen 26 zur Luftführung aus, um damit die abgestützten Erregerspulen 7, 8, 9 und 10 verbessert zu kühlen. Je nach Drehrichtung des Läufers 2 entfaltet die Leitfläche 26 des einen Dämpferstabs 19 gegenüber dem anderen gegenüberliegenden Dämpferstab 19 mehr Wirkung bei der Luftleitung in Richtung der jeweiligen Erregerspule 7, 8, 9 bzw.10.

## Patentansprüche

1. Schenkelpolmaschine mit einem Läufer (2), der ausgeprägte Pole (3, 4, 5, 6), mindestens eine Erregerwicklung (11) und mindestens eine Dämpferwicklung (12) aufweist, deren Dämpferstäbe (13, 19) wenigstens bereichsweise sowohl an mindestens einem Pol (3, 4, 5, 6) als auch zwischen zwei benachbarten Polen (3, 4 bzw. 4, 5 bzw. 5, 6 bzw. 6, 3) vorgesehen sind, **dadurch gekennzeichnet, dass** der Läufer (2) wenigstens eine die Erregerwicklungsteile (7, 8, 9, 10) benachbarter Pole (3, 4 bzw. 4, 5 bzw. 5, 6 bzw. 6, 3) abstützende Wicklungsabstützung (14) aufweist, die mindestens einen zwischen zwei Polen (3, 4 bzw. 4, 5 bzw. 5, 6 bzw. 6, 3) vorgesehenen Dämpferstab (19) der Dämpferwicklung (12) ausbildet, welcher Dämpferstab (19) mit den anderen Teilen der Dämpferwicklung (12) elektrisch verbunden, insbesondere kurzgeschlossen, ist.

2. Schenkelpolmaschine nach Anspruch 1, **dadurch gekennzeichnet, dass** sich die Wicklungsabstützung (14) mit Dämpferstäben (19) über die Länge der Pollücke (15, 16, 17, 18) zwischen den benachbarten Polen (3, 4 bzw. 4, 5 bzw. 5, 6 bzw. 6, 3) erstreckt.

3. Schenkelpolmaschine nach Anspruch 1 oder 2, **dadurch gekennzeichnet, dass** die Wicklungsabstützung (14) je einen an den jeweiligen Pol (3, 4, 5, 6) anschließenden Dämpferstab (19) aufweist.

4. Schenkelpolmaschine nach Anspruch 2 oder 3, **dadurch gekennzeichnet, dass** die Dämpferstäbe (19) der Wicklungsabstützung (14) gegenüber den Dämpferstäben (13) der Pole (3, 4, 5, 6) elektrisch höher leitfähig ausgeführt sind.

5. Schenkelpolmaschine nach Anspruch 2, 3 oder 4, **dadurch gekennzeichnet, dass** die Wicklungsabstützung (14) keilförmige Abstützelemente (20) aufweist, die voneinander beabstandet über die Länge der Pollücke (15, 16, 17, 18) verteilt die Erregerwicklungsteile (7, 8, 9, 10) der benachbarten Pole (3, 4 bzw. 4, 5 bzw. 5, 6 bzw. 6, 3) abstützen und über die Dämpferstäbe (19) miteinander verbunden sind.

6. Schenkelpolmaschine nach Anspruch 5, **dadurch gekennzeichnet, dass** Abstützelemente (20) und Dämpferstäbe (19) stoffschlüssig miteinander verbunden, insbesondere verschweißt sind.

7. Schenkelpolmaschine nach einem der Ansprüche 1 bis 6, **dadurch gekennzeichnet, dass** die Wicklungsabstützung (14) aus einem nicht oder schlecht magnetisch leitenden Werkstoff, insbesondere aus einem Aluminiumwerkstoff, besteht.

8. Schenkelpolmaschine nach einem der Ansprüche 1 bis 7, **dadurch gekennzeichnet, dass** die Wicklungsabstützung (14) Leitflächen (26) für eine Luftführung zu seinen abgestützten Erregerwicklungsteilen (7, 8, 9, 10) ausbilden.

9. Schenkelpolmaschine nach einem der Ansprüche 1 bis 8, **dadurch gekennzeichnet, dass** die Wicklungsabstützung (14) in die Pollücke (15, 16, 17, 18) zwischen den benachbarten Polen (3, 4 bzw. 4, 5 bzw. 5, 6 bzw. 6, 3) eingesetzt ist und insbesondere über mittige Befestigungsschrauben (21) mit dem Läuferkern (25) verbunden ist.

10. Schenkelpolmaschine nach einem der Ansprüche 1 bis 9, **dadurch gekennzeichnet, dass** zwischen der Wicklungsabstützung (14) und der Erregerwicklung (12) eine elektrische Isolierung (22) vorgesehen ist.

11. Schenkelpolmaschine nach einem der Ansprüche 1 bis 10, **dadurch gekennzeichnet, dass** die Wicklungsabstützung (14) endseitig mit den anderen Teilen der Dämpferwicklung über eine Kurzschlussleitung (23) elektrisch verbunden ist.

12. Schenkelpolmaschine nach einem der Ansprüche 1 bis 11, **dadurch gekennzeichnet, dass** die Dämpferwicklung (14) je eine an den Läuferenden befestigte, elektrisch leitfähige Platte (24) aufweist, die mit der Wicklungsabstützung (14) und den anderen Teilen der Dämpferwicklung (12) elektrisch kurzgeschlossen ist.
